# EUROPÄISCHE PATENTANMELDUNG

(11) **EP 0 801 277 A2**
(43) Veröffentlichungstag der Anmeldung: **15.10.1997**
(21) Anmeldenummer: 97101784.3
(22) Anmeldetag: 05.02.1997
(51) Int. Cl.: F24J 2/00

(54) **Gebäude mit einer Solarenergie nutzenden Aussenwand**

(30) Priorität: 12.04.1996 DE 19614515
(71) Anmelder: Norsk Hydro ASA, 0257 Oslo 2 (NO)
(72) Erfinder: Schulz, Harald, Dr., 86381 Krumbach (DE)
(74) Vertreter: Dziewior, Joachim, Dipl.-Phys. Dr.

(57) **Zusammenfassung**

Das Gebäude besitzt eine Außenwand (1), die zur Nutzung von Solarenergie zwischen einer gebäudeinnenseitigen Wandschale (6) und einer für die Solarstrahlung durchlässigen, gebäudeaußenseitigen Wandschale (7) eine die Solarstrahlung aufnehmende Absorptionsschicht (9) aufweist, wobei die in der Absorptionsschicht (9) aus der Solarstrahlung gewonnene Wärmeenergie einen durch die gebäudeinnenseitige Wandschale (6) und die Wandinnenoberfläche (3) in den Gebäudeinnenraum fließenden Wärmestrom ergibt. Mindestens ein für die Raumheizung vorgesehener, ein Wärmespeichermittel insbesondere Heizungswasser enthaltender Heizungskörper (2) ist auf der Gebäudeinnenseite der Außenwand (1) mit freiem Abstand (d) vor der Wandinnenoberfläche (3) angeordnet. Durch eine Verkleidung (10) ist ein zwischen der Wandinnenoberfläche (3) und dem Heizungskörper (2) gelegener, von der Luft des Gebäudeinnenraums durchströmbarer Konvektionsraum (11) gebildet und es sind verstellbare Strömungseinrichtungen vorgesehen, mit welchen der Luftstrom durch den Konvektionsraum (11) einstellbar ist.

## Beschreibung

Die Erfindung betrifft ein Gebäude mit Brüstungs- und Wandbereichen, die zur Nutzung von Solarenergie zwischen einer gebäudeinnenseitigen Wandschale und einer für die Solarstrahlung durchlässigen, gebäudeaußenseitigen Wandschale eine Solarstrahlung aufnehmende Absorptionsschicht aufweist, wobei die in der Absorptionsschicht aus der Solarstrahlung gewonnene Wärmeenergie einen durch die gebäudeinnenseitige Wandschale und die Wandinnenoberfläche in den Gebäudeinnenraum fließenden Wärmestrom ergibt.

Gebäude mit einer derartig aufgebauten Außenwand sind aus WO 95/10 741 bekannt. Für die am Standort des Gebäudes zu erwartende größtmögliche Sonneneinstrahlung sind der Gesamtenergiedurchlaßgrad, die Wärmedurchgangswiderstände der beiden Wandschalen sowie der Absorptionsgrad an der Absorptionsschicht so aufeinander abgestimmt, daß sowohl ein maximaler Temperaturwert an der Absorptionsschicht als auch ein maximaler Temperaturwert an der Wandinnenoberfläche nicht überschritten wird. Durch die Temperaturbegrenzung an der Absorptionsschicht wird erreicht, daß Überhitzungen im Wandaufbau vermieden werden, während die Temperaturbegrenzung an der Wandinnenoberfläche dafür sorgt, daß die Temperatur an der Wandinnenoberfläche wie auch der an der Wandinnenoberfläche zur Luft im Gebäudeinnenraum hin auftretende Temperatursprung selbst bei maximaler Sonneneinstrahlung in Bereichen liegt, die von im Innenraum sich aufhaltenden Personen noch als behaglich empfunden werden. Dabei wird bewußt eine Verringerung der Solarenergienutzung während einer verminderten Sonneneinstrahlungsperiode in Kauf genommen.

Der Erfindung liegt die Aufgabe zugrunde, bei einem Gebäude mit einer Außenwand der eingangs genannten Art die Anordnung so weiter auszubilden, daß die bewußt in Kauf genommene Verringerung der Solarenergienutzung möglichst klein ist.

Diese Aufgabe wird bei einem Gebäude mit den eingangs genannten Merkmalen erfindungsgemäß dadurch gelöst, daß mindestens ein für die Raumheizung vorgesehener, ein Wärmespeichermittel enthaltender Heizungskörper auf der Gebäudeinnenseite der Außenwand mit freiem Abstand vor der Wandinnenoberfläche angeordnet ist, daß durch eine Verkleidung ein zwischen der Wandinnenoberfläche und dem Heizungskörper gelegener, von der Luft des Gebäudeinnenraums durchströmbarer Konvektionsraum gebildet ist, und daß verstellbare Strömungseinrichtungen vorgesehen sind, mit welchen der Luftstrom durch den Konvektionsraum einstellbar und auch absperrbar ist.

Bei dieser Anordnung dienen der Heizungskörper und die Verkleidung dazu, einen Teil der Wandinnenoberfläche abzuschirmen und dadurch die Wärmeabstrahlung dieses Teils der Wandinnenoberfläche in den Gebäudeinnenraum hinein zu reduzieren, so daß für die maximale Temperatur an der Wandinnenoberfläche ein entsprechender höherer Wert zulässig wird, ohne daß das Gefühl der Behaglichkeit sich im Gebäudeinnenraum aufhaltender Personen beeinträchtigt wird. Diese zulässige höhere Maximaltemperatur an der Wandinnenoberfläche bedeutet eine bessere Nutzung des Solarenergieangebots. Dabei ermöglicht es die Einstellung des Luftstroms durch den Konvektionsraum, den Wärmeübergang von der Wandinnenoberfläche in Richtung zum Gebäudeinnenraum hin nach Wunsch zu beeinflussen, indem eine Drosselung des Luftstroms den Wärmeübergang verringert. Im Sommer bei entsprechend hohen Außentemperaturen und/oder hohem Solarenergieangebot wird der Luftstrom gedrosselt oder ganz gesperrt, so daß zu hohe Temperaturen im Gebäudeinnenraum vermieden werden, während im Winter bei niedrigen Außentemperaturen und/oder niedrigem Solarenergieangebot ein stärkerer Luftstrom die durch die gebäudeinnenseitige Wandschale fließende Wärme an der Wandinnenoberfläche entsprechend vollständiger aufnehmen und in den Gebäudeinnenraum übertragen kann. Das im Heizungskörper vorhandene Speichermittel ermöglicht eine Speicherung der Wärme aus dem Konvektionsraum zu Zeiten hohen Solarenergieangebots, wenn der Luftstrom durch den Konvektionsraum weitgehend gedrosselt oder ganz gesperrt ist, und die verzögerte Abgabe der gespeicherten Wärme bei kleiner werdendem oder völlig verschwindendem Solarenergieangebot, wie beispielsweise nachts, wenn der Wärmeentzug aus dem Speichermittel außer durch direkte Abstrahlung in den Innenraum insbesondere auch durch den dann wieder im Konvektionsraum stärker fließenden Luftstrom erfolgen kann.

Die Verstellung der Strömungseinrichtungen, mit welchen der Luftstrom durch den Konvektionsraum einstellbar ist, erfolgt allgemein in Abhängigkeit von den jeweils herrschenden thermischen Verhältnissen außerhalb und innerhalb des Gebäudes und vom Solarenergieangebot. Diese Verstellung kann im einfachsten und gröbsten Fall von Hand derart erfolgen, daß im Sommer der Luftstrom durch den Konvektionsraum gedrosselt oder ganz gesperrt ist, im Winter dagegen fließen kann. Eine dem gegenüber wesentlich bessere und daher bevorzugte Ausführungsform der Erfindung ist allerdings dadurch gekennzeichnet, daß die Strömungseinrichtungen zu ihrer Verstellung Stellglieder besitzen und die Stellglieder abhängig von ausgewählten Klimawerten außerhalb und/oder innerhalb des Gebäudes steuerbar sind. Als Klimawerte für diese Steuerung können insbesondere die Außentemperatur und das Solarenergieangebot einerseits und die Innentemperatur im Gebäudeinnenraum und/oder die Innenoberflächentemperatur andererseits dienen, wozu diese Klimawerte erfassende Fühler vorgesehen sein können.

Eine weiter bevorzugte Ausführungsform der Erfindung ist dadurch gekennzeichnet, daß die Verkleidung eine den Konvektionsraum oben übergreifende, an die Wandinnenoberfläche der Außenwand anschließende Deckwand mit Austrittsöffnungen für die den Konvektionsraum durchströmende Luft aufweist und daß die verstellbaren Strömungseinrichtungen von Verschlußgliedern, wie Schiebern, Klappen oder dergleichen, für die Austrittsöffnungen gebildet sind. Vorzugsweise besitzt die Verkleidung weiter eine zur Wandinnenoberfläche im wesentlichen parallele Frontwand, die oben an die Deckwand anschließt und unterhalb der Deckwand den Konvektionsraum gegen den Gebäudeinnenraum hin abschließt. Dabei kann die Frontwand den Heizungskörper zum Gebäudeinnenraum hin vollständig abdecken, der Heizungskörper sich somit insgesamt innerhalb des Konvektionsraums befinden. Es besteht aber auch die Möglichkeit, daß die Frontwand eine den Heizungskörper aufnehmende Aussparung aufweist, in der der Heizungskörper mit seiner dem Gebäudeinnenraum zugekehrten Wandung im wesentlichen bündig mit der Außenfläche der Frontwand abschließt und mit seinem oberen Rand sowie seinen beiden seitlichen Rändern dicht an die zugeordneten Ränder der Aussparung anschließt. Die Verkleidung kann dann während der Heizperiode die Wärmeabstrahlung des Heizungskörpers in den Gebäudeinnenraum hinein nicht behindern.

Die Luftzufuhr in den Konvektionsraum kann auf verschiedene Weise erfolgen. Im einfachsten Fall kann der Heizkörper aufgeständert sein; es besteht jedoch auch die Möglichkeit, daß für den Eintritt der Luft in den Konvektionsraum die Frontwand im Fußbodenbereich des Gebäudeinnenraums Eintrittsöffnungen aufweist. Dabei kann sich der Luftstrom allein aus Gravitationskräften ergeben; es kann aber auch ein ihn antreibendes Gebläse vorgesehen sein.

Sind mehrere Heizungskörper vor der Wandinnenoberfläche nebeneinander angeordnet, erstreckt sich vorzugsweise die Deckwand und/oder die Frontwand der Verkleidung durchlaufend über alle Heizungskörper, so daß beispielsweise der gesamte Brüstungsbereich der Außenwand gebäudeinnenseitig durch die Verkleidung bzw. Heizungskörper überdeckt sein kann.

Die Verkleidung kann auf der dem Konvektionsraum zugewandten Innenoberfläche eine Wärmedämmschicht aufweisen, damit eine hohe Lufttemperatur im Konvektionsraum, bei beispielsweise geringem oder fehlendem Luftstrom, insbesondere bei hohem Solarangebot, an der dem Gebäudeinnenraum zugewandten Oberfläche der Verkleidung keine unerwünschten hohen Temperaturen erzeugen kann. Auch empfiehlt es sich im Hinblick auf die Reduzierung der Wärmeabstrahlung der Wandinnenoberfläche, daß der Wandinnenoberfläche eine möglichst geschlossene Manteloberfläche des Heizungskörpers gegenübersteht und beide Oberflächen zwischen sich den Konvektionsraum einschließen. Dabei können die Wandinnenoberfläche und die Manteloberfläche bezüglich ihrer Strahlungsemissivität einander angepaßt sein.

Im allgemeinen wird der Heizungskörper ein an einen Heizungswasserumlauf angeschlossener Radiator oder Konvektor sein, wobei das den Heizungskörper füllende Heizungswasser das Wärmespeichermittel bildet. Dann kann es von besonderem Vorteil sein, die Anordnung so zu treffen, daß das Heizungswasser zwischen Heizkörpern, die sich an einer Außenwand mit Wärmeüberschuß befinden, einerseits und Heizkörpern, die sich an einer Außenwand mit Wärmedefizit befinden, andererseits umwälzbar ist. Dann kann insbesondere in Übergangsjahreszeiten das auf der Gebäudesüdseite im Überschuß vorhandene Solarenergieangebot durch Speicherung im Wasser der dortigen Heizungskörper (bei insbesondere gesperrtem oder gedrosseltem Luftstrom) in die Heizungskörper auf der Gebäudenordseite übertragen und so das dort bestehende Energiedefizit ausgeglichen werden. Es kann dabei auch vorgesehen sein, daß in dem Kreislauf des umwälzbaren Heizungswassers ein Wärmetauscher angeordnet ist, durch den die Wärme einem Brauchwasserreservoir zuführbar ist.

Schließlich besteht im Rahmen der Erfindung die Möglichkeit, daß der Heizungskörper von einer oder mehreren, mit Abstand und parallel zueinander angeordneten Platten gebildet ist.

Im folgenden wird die Erfindung an in der Zeichnung dargestellten Ausführungsbeispielen näher erläutert; es zeigen:
- Fig. 1: einen gemäß der Erfindung ausgebildeten Gebäudeteil, teils im Querschnitt, teils in einer Schrägansicht vom Gebäudeinnenraum her gesehen,
- Fig. 2: eine Draufsicht auf die Deckwand der Verkleidung in Fig. 1 in Richtung des dort eingetragenen Pfeils II,
- Fig. 3: einen Teil des Querschnitts aus Fig. 1 in vergrößerter Darstellung, und
- Fig. 4: den Gegenstand der Fig. 3 in einer anderen Ausführungsform,
- Fig. 5: unterschiedliche Gestaltungsmöglichkeiten des Heizkörpers.

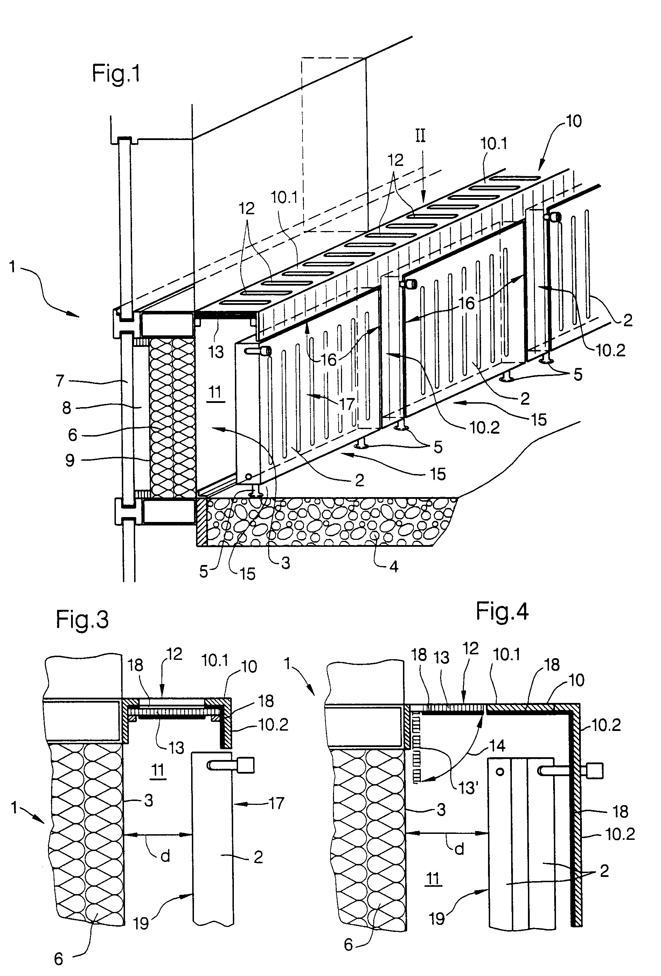

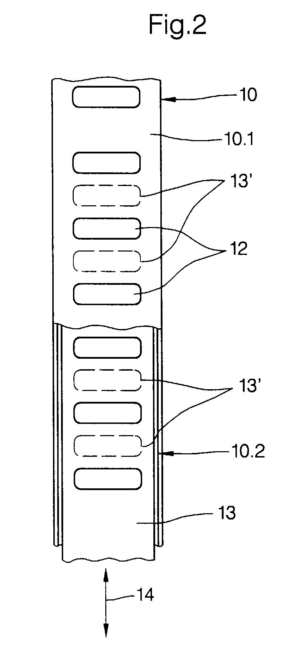

Die Fig. 1 zeigt einen Teil eines Gebäudes mit einem Brüstungsbereich 1 und auf der Gebäudeinnenseite des Brüstungsbereichs für die Raumheizung vorgesehenen, mit Wasser gefüllten Heizungskörpern 2, die mit freiem Abstand d vor der Wandinnenoberfläche 3 angeordnet sind. Eine Geschoßdecke des Gebäudes ist mit 4 bezeichnet. Auf dieser Geschoßdecke 4 sind die Heizungskörper 2 mit Füßen 5 abgestützt. Die Außenwand 1 besitzt einen zur Nutzung von Solarenergie bestimmten Aufbau, der bezüglich seiner Einzelheiten nur im mitteleren Wandelement des gezeigten Teils der Außenwand 1 dargestellt ist. Zwischen einer als Wärmedämmschicht ausgebildeten gebäudeinnenseitigen Wandschale 6 und einer für Solarstrahlung durchlässigen, gebäudeaußenseitigen Wandschale 7, die als Wärmedämmschicht einen Luftraum 8 enthält, ist eine die Solarstrahlung aus dem Luftraum 8 aufnehmende Absorptionsschicht 9 angeordnet. Die in der Absorptionsschicht 9 aus der Solarstrahlung gewonnene Wärmeenergie ergibt einen einerseits nach außen gerichteten Wärmestrom, andererseits einen durch die gebäudeinnenseitige Wandschale 6 und die Wandinnenoberfläche 3 in den Gebäudeinnenraum (jeweils auf der in Zeichnung rechten Seite der Außenwand 1) fließenden Wärmestrom. Auf der Gebäudeinnenseite ist eine Verkleidung 10 vorgesehen, durch die ein zwischen der Wandinnenoberfläche 3 und dem Heizungskörper 2 gelegener, von der Luft des Gebäudeinnenraums durchströmbarer Konvektionsraum 11 gebildet ist. Der den Konvektionsraum 10 durchfließende Luftstrom ist hinsichtlich seiner Stärke durch verstellbare Strömungseinrichtungen einstellbar. Im einzelnen besitzt die Verkleidung 10 eine den Konvektionsraum 11 oben übergreifende, an die Wandinnenoberfläche 3 der Außenwand 1 anschließende Deckwand 10.1 mit Austrittsöffnungen 12 für die den Konvektionsraum 11 durchströmende Luft. Die den Luftstrom einstellenden Strömungseinrichtungen sind von geeigneten Verschlußgliedern 13 für diese Austrittsöffnungen 12 gebildet. Solche Verschlußglieder 13 können verstellbare Schieber, wie in den Fig. 1, 2 und 3, oder Klappen, wie in Fig. 4 sein, wobei die Verschlußglieder 13 in der Zeichnung in ihrer die Austrittsöffnungen 12 schließenden Stellung ausgezogen, in ihrer die Austrittsöffnungen 12 völlig freigebenden Stellung 13' gestrichelt dargestellt sind. Die Verstellung der Verschlußglieder 13 erfolgt jeweils in Richtung der Doppelpfeile 14. Weiter besitzt die Verkleidung 10 eine zur Wandinnenoberfläche 3 im wesentlichen parallele Frontwand 10.2, die oben an die Deckwand 10.1 anschließt und unterhalb der Deckwand 10.1 den Konvektionsraum 11 gegen den Gebäudeinnenraum hin bis auf im Fußbodenbereich des Gebäudeinnenraums vorgesehene Öffnungen 15 für den Eintritt der Luft in den Konvektionsraum 11 abschließt. Die Deckwand 10.1 und die Frontwand 10.2 erstrecken sich durchlaufend über alle Heizungskörper 2. Dabei kann, wie in den Fig. 1 bis 3 dargestellt, die Frontwand 10.2 für jeden Heizungskörper 2 eine ihn aufnehmende Aussparung 16 besitzen, in der der Heizungskörper 2 mit seiner dem Gebäudeinnenraum zugekehrten Wandung 17 bündig mit der Außenfläche der Frontwand 10.2 abschließt und mit seinem oberen Rand sowie seinen beiden seitlichen Rändern dicht an die zugeordneten Ränder der Aussparung 16 anschließt. Es besteht aber auch die in Fig. 4 gezeigte Möglichkeit, daß die Frontwand 10.2 die Heizungskörper 2 zum Gebäudeinnenraum hin vollständig abdeckt, die Heizungskörper 2 sich somit insgesamt innerhalb des Konvektionsraums 11 befinden. Die die Strömungseinrichtungen bildenden Verschlußglieder 13 besitzen zu ihrer Verstellung im einzelnen nicht dargestellte Stellglieder, die abhängig von ausgewählten Klimawerten außerhalb und/oder innerhalb des Gebäudes steuerbar sind. Derartige Klimawerte können die Außentemperatur und das Solarenergieangebot einerseits und die Innentemperatur im Gebäudeinnenraum und/oder die Innenoberflächentemperatur andererseits sein. Zur Erfassung dieser Klimawerte können Fühler vorgesehen sein, die in der Zeichnung ebenfalls nicht dargestellt sind.

Die Verkleidung 10 kann auf der dem Konvektionsraum 11 zugewandten Innenoberfläche eine Wärmedämmschicht 18 tragen, die in den Fig. 3 und 4 lediglich durch eine dickere Strichsstärke angedeutet ist. Der Wandinnenoberfläche 3 der Außenwand steht der Heizungskörper 2 mit einer möglichst geschlossenen Manteloberfläche 19 gegenüber. Zwischen diesen beiden Oberflächen 3, 19 befindet sich der Konvektionsraum 11, so daß die den Konvektionsraum 11 durchströmende Luft an beiden Oberflächen 3, 19 entlang streichen kann. Die Wandinnenoberfläche 3 und die Manteloberfläche 19 können bezüglich ihrer Strahlungsemissivität einander angepaßt sein. Im Ergebnis kann auf diese Weise unschwer erreicht werden, daß die Heizungskörper 2 in Verbindung mit der Verkleidung 10 die Wärmeabstrahlung der Wandinnenoberfläche 3, soweit letztere innerhalb des Konvektionsraumes 11 liegt, erheblich reduzieren.

Die Heizungskörper 2 sind an einen im einzelnen nicht dargestellten Heizungswasserumlauf angeschlossen und als Radiator oder Konvektor ausgebildet, wobei diese je nach individueller Ausgestaltung die vorstehend erwähnte geschlossene Manteloberfläche 19 bereits besitzen können. Das die Heizungskörper 2 füllende Heizungswasser bildet ein Wärmespeichermittel, das Wärme aus dem Konvektionsraum 11 aufnehmen und speichern kann, insbesondere dann, wenn die Austrittsöffnungen 12 mehr oder weniger geschlossen und damit der Luftstrom durch den Konvektionsraum 11 entsprechend gedrosselt bzw. gesperrt ist. Damit auch von der Wandinnenoberfläche 3 auf die Manteloberfläche 19 gelangende Strahlungswärme der Speicherung im Heizungswasser zugeführt werden kann, muß sich die Manteloberfläche 19, wie dies bei Konvektoren ohnehin der Fall ist, in guter Wärmeleitungsverbindung mit den das Heizungswasser führenden Heizungskörperteilen befinden.

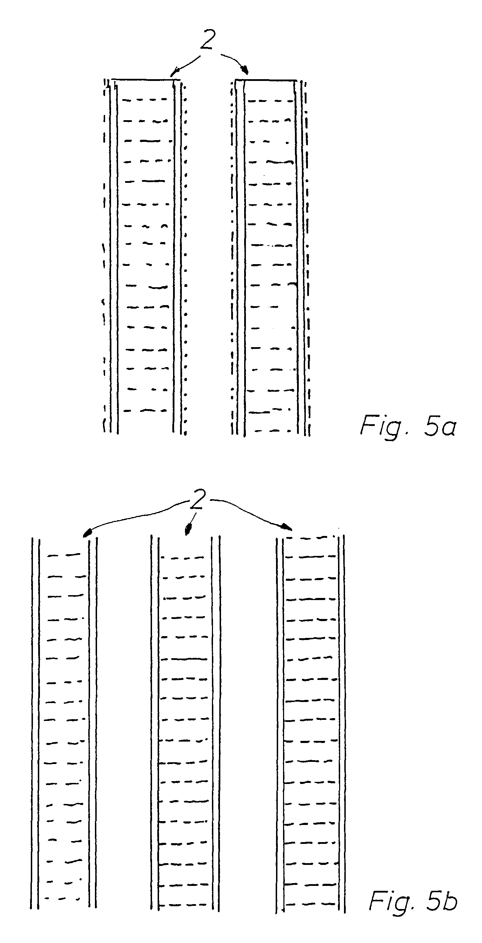

In Fig. 5 ist schließlich noch angedeutet, daß der Heizungskörper 2 auch von mehreren, mit Abstand und parallel zueinander angeordneten Platten gebildet sein kann.

## Patentansprüche

1. Gebäude mit Brüstungs- und Wandbereichen (1), die zur Nutzung von Solarenergie zwischen einer gebäudeinnenseitigen Wandschale (6) und einer für die Solarstrahlung durchlässigen, gebäudeaußenseitigen Wandschale (7) eine Solarstrahlung aufnehmende Absorptionsschicht (9) aufweist, wobei die in der Absorptionsschicht (9) aus der Solarstrahlung gewonnene Wärmeenergie einen durch die gebäudeinnenseitige Wandschale (6) und die Wandinnenoberfläche (3) in den Gebäudeinnenraum fließenden Wärmestrom ergibt, dadurch gekennzeichnet, daß mindestens ein für die Raumheizung vorgesehener, ein Wärmespeichermittel enthaltender Heizungskörper (2) auf der Gebäudeinnenseite der Außenwand (1) mit freiem Abstand (d) vor der Wandinnenoberfläche (3) angeordnet ist, daß durch eine Verkleidung (10) ein zwischen der Wandinnenoberfläche (3) und dem Heizungskörper (2) gelegener, von der Luft des Gebäudeinnenraums durchströmbarer Konvektionsraum (11) gebildet ist, und daß verstellbare Strömungseinrichtungen vorgesehen sind, mit welchen der Luftstrom durch den Konvektionsraum (11) einstellbar und auch absperrbar ist.

2. Gebäude nach Anspruch 1, dadurch gekennzeichnet, daß die Strömungseinrichtungen zu ihrer Verstellung Stellglieder besitzen und die Stellglieder abhängig von ausgewählten Klimawerten außerhalb und/oder innerhalb des Gebäudes steuerbar sind.

3. Gebäude nach Anspruch 2, dadurch gekennzeichnet, daß als Klimawerte für die Steuerung der Stellglieder die Außentemperatur und das Solarenergieangebot einerseits und die Innentemperatur im Gebäudeinnenraum und/oder die Innenoberflächentemperatur andererseits dienen und diese Klimawerte erfassende Kühler vorgesehen sind.

4. Gebäude nach einem der Ansprüche 1 bis 3, dadurch gekennzeichnet, daß die Verkleidung (10) eine den Konvektionsraum (11) oben übergreifende, an die Wandinnenoberfläche (3) der Außenwand (1) anschließende Deckwand (10.1) mit Austrittsöffnungen (12) für die den Konvektionsraum (11) durchströmende Luft aufweist und daß die verstellbaren Strömungseinrichtungen von Verschlußgliedern (13), wie Schiebern, Klappen oder dergleichen, für die Austrittsöffnungen (12) gebildet sind.

5. Gebäude nach Anspruch 4, dadurch gekennzeichnet, daß die Verkleidung (10) eine zur Wandinnenoberfläche (3) im wesentlichen parallele Frontwand (10.2) besitzt, die oben an die Deckwand (10.1) anschließt und unterhalb der Deckwand (10.1) den Konvektionsraum (11) gegen den Gebäudeinnenraum hin abschließt.

6. Gebäude nach Anspruch 5, dadurch gekennzeichnet, daß die Frontwand (10.1) den Heizungskörper (2) zum Gebäudeinnenraum hin vollständig abdeckt, der Heizungskörper (2) sich somit insgesamt innerhalb des Konvektionsraums (11) befindet.

7. Gebäude nach Anspruch 5, dadurch gekennzeichnet, daß die Frontwand (10.2) eine den Heizungskörper (2) aufnehmende Aussparung (16) aufweist, in der der Heizungskörper (2) mit seiner dem Gebäudeinnenraum zugekehrten Wandung (17) bündig mit der Außenfläche der Frontwand (10.2) abschließt und mit seinem oberen Rand sowie seinen beiden seitlichen Rändern dicht an die zugeordneten Ränder der Aussparung (16) anschließt.

8. Gebäude nach Anspruch 6 oder 7, dadurch gekennzeichnet, daß die Frontwand (10.2) im Fußbodenbereich des Gebäudeinnenraums Öffnungen (15) für den Eintritt der Luft in den Konvektionsraum (11) aufweist.

9. Gebäude nach einem der Ansprüche 4 bis 8, dadurch gekennzeichnet, daß bei mehreren vor der Wandinnenoberfläche (3) nebeneinander angeordneten Heizungskörpern (2) sich die Deckwand (10.1) und/oder die Frontwand (10.2) der Verkleidung (10) durchlaufend über alle Heizungskörper (2) erstreckt.

10. Gebäude nach einem der Ansprüche 1 bis 9, dadurch gekennzeichnet, daß die Verkleidung (10) auf der dem Konvektionsraum (11) zugewandten Innenoberfläche eine Wärmedämmschicht (18) aufweist.

11. Gebäude nach einem der Ansprüche 1 bis 10, dadurch gekennzeichnet, daß der Wandinnenoberfläche (3) der Außenwand (1) eine möglichst geschlossene Manteloberfläche (19) des Heizungskörpers (2) gegenübersteht und beide Oberflächen (3, 19) zwischen sich den Konvektionsraum (11) einschließen.

12. Gebäude nach Anspruch 11, dadurch gekennzeichnet, daß die Wandinnenoberfläche (3) und die Manteloberfläche (19) bezüglich ihrer Strahlungsemissivität einander angepaßt sind.

13. Gebäude nach einem der Ansprüche 1 bis 12, dadurch gekennzeichnet, daß der Heizungskörper (2) ein an einen Heizungswasserumlauf angeschlossener Radiator oder Konvektor ist, wobei das den Heizungskörper füllende Heizungswasser das Wärmespeichermittel bildet.

14. Gebäude nach Anspruch 13, dadurch gekennzeichnet, daß das Heizungswasser zwischen Heizkörpern (2), die sich an einer Außenwand mit Wärmeüberschuß befinden, einerseits und Heizkörpern (2), die sich an einer Außenwand mit Wärmedefizit befinden, andererseits umwälzbar ist.

15. Gebäude nach Anspruch 13 oder 14, dadurch gekennzeichnet, daß in dem Kreislauf des umwälzbaren Heizungswassers ein Wärmetauscher angeordnet ist, durch den die Wärme einem Brauchwasserreservoir zuführbar ist.

16. Gebäude nach einem der Ansprüche 1 bis 15, dadurch gekennzeichnet, daß der Heizungskörper (2) von einer oder mehreren, mit Abstand und parallel zueinander angeordneten Platten gebildet ist.
